(19) Europäisches Patentamt / European Patent Office / Office européen des brevets

(11) **EP 4 523 789 A1**

(12) **EUROPEAN PATENT APPLICATION**
published in accordance with Art. 153(4) EPC

(43) Date of publication:
**19.03.2025 Bulletin 2025/12**

(21) Application number: **23803551.3**

(22) Date of filing: **09.05.2023**

(51) International Patent Classification (IPC):
**B01J 23/46** (2006.01)   **B01D 53/86** (2006.01)
**B01J 35/04** (2006.01)   **B01J 37/02** (2006.01)

(52) Cooperative Patent Classification (CPC):
**B01D 53/86; B01J 23/46; B01J 37/02; B01J 37/30; B01J 35/56; Y02C 20/10**

(86) International application number:
**PCT/JP2023/017382**

(87) International publication number:
**WO 2023/219074 (16.11.2023 Gazette 2023/46)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **12.05.2022 JP 2022079029**

(71) Applicant: **Sumitomo Chemical Company, Limited Tokyo 103-6020 (JP)**

(72) Inventor: **YONEMOTO, Tetsuro Ichihara-shi Chiba 299-0195 (JP)**

(74) Representative: **Global IP Europe Patentanwaltskanzlei Pfarrstraße 14 80538 München (DE)**

(54) **CATALYST, CATALYST PRECURSOR, METHOD FOR PRODUCING CATALYST, REACTION TUBE FILLED WITH CATALYST, AND METHOD FOR DECOMPOSING NITROUS OXIDE**

(57)   Provided are a catalyst capable of efficiently decomposing nitrous oxide, a precursor thereof, a method of producing the catalyst, a method of decomposing nitrous oxide and a catalyst packed reaction tube capable of efficiently decomposing nitrous oxide.

Disclosed are: a catalyst including a titanium oxide-containing carrier carrying a component containing at least one kind selected from the group consisting of ruthenium and ruthenium compounds, the catalyst forming a catalyst packed bed in a reaction tube, in which the catalyst has a honeycomb structure such that a packing volume ratio is from 35 to 50 vol% when the catalyst packed bed is formed; a catalyst including a carrier carrying a component containing ruthenium acid; a precursor of the catalyst; a method of producing the catalyst; a catalyst packed reaction tube packed with the catalyst in which a packing volume ratio of the catalyst in the catalyst packed bed is from 35 to 50 vol%; and a method of decomposing nitrous oxide, which includes the step of bringing the catalyst into contact with a nitrous oxide-containing gas containing nitrous oxide.

EP 4 523 789 A1

**Description**

FIELD OF THE INVENTION

The present invention relates to a catalyst, a catalyst precursor, a method of producing a catalyst, a catalyst packed reaction tube, and a method of decomposing nitrous oxide.

BACKGROUND OF THE INVENTION

From the viewpoints of global environment protection and air pollution prevention, nitrogen oxides (NOx) in exhaust gas are regarded as a problem, and the emission thereof is strictly regulated. In particular, among nitrogen oxides is a nitrogen dioxide ($NO_2$), which is harmful to the human body and causes photochemical smog and acid rain and is thus a target of emission control. Here, various denitration techniques have been studied and put into practice in order to reduce the emission amount. However, nitrous oxide ($N_2O$), which is a kind of nitrogen oxide, is not currently subject to emission control, and is usually released into the atmosphere as it is. Actually, in the gas discharged from a chemical production plant, such as a nitric acid production plant, an $\varepsilon$-caprolactam production plant, an adipic acid production plant, nitrogen monoxide and nitrogen dioxide are decomposed and removed by denitration treatment, but nitrous oxide as a by-product is often discharged (released) into the atmosphere without being decomposed and removed.
However, once a greenhouse gas such as nitrous oxide is released into the atmosphere, an increase in the level of greenhouse gas makes stronger the greenhouse effect on the atmosphere. This is considered to cause global warming. Nitrous oxide is then considered to elicit a warming effect about 300 times that of carbon dioxide. Thus, in recent years, there is an increasing interest in reducing emission of nitrous oxide into the atmosphere together with, for instance, carbon dioxide and methane. With the increase in sustainable environmental awareness, it is expected that nitrous oxide will be a target of emission gas control in the near future. Therefore, there is a need for a technology for decomposing and removing nitrous oxide from exhaust gas to suppress the amount of emission into the atmosphere. As a technology for decomposing and removing nitrous oxide from exhaust gas, for example, Patent Literature 1 describes a nitrous oxide decomposition method in which a gas containing nitrous oxide is catalytically decomposed in the co-presence of a reducing gas by using a catalyst characterized by carrying at least one or more noble metals selected from ruthenium (Ru), rhodium (Rh), palladium (Pd), rhenium (Re), osmium (Os), iridium (Ir), or platinum (Pt).

CITATION LIST

PATENT LITERATURE

Patent Literature 1: JP-A-H06-218232 ("JP-A" means unexamined published Japanese patent application)

SUMMARY OF THE INVENTION

TECHNICAL PROBLEM

The nitrous oxide decomposition method described in Patent Literature 1 is considered to be able to decompose nitrous oxide in a nitrous oxide-containing gas by catalytically decomposing the nitrous oxide-containing gas in the co-presence of a reducing gas such as carbon monoxide, a hydrocarbon gas, a mineral oil-based hydrocarbon gas, and/or alcohols. However, although Patent Literature 1 describes the amount of noble metal supported on a catalyst, the shape of the catalyst is not studied at all, and the efficiency of decomposing nitrous oxide is not necessarily sufficient, and further improvement is desired.
The present invention provides a catalyst capable of efficiently decomposing nitrous oxide, a precursor of the catalyst, and a method of producing the catalyst. Further, the present invention provides a method of decomposing nitrous oxide, which is capable of efficiently decomposing nitrous oxide, and a catalyst packed reaction tube used in the method.

SOLUTION TO PROBLEM

Specifically, the above problems of the present invention are solved by the following means.

<1> A catalyst, including a titanium oxide-containing carrier carrying a component containing at least one kind selected from the group consisting of ruthenium and ruthenium compounds,

wherein the catalyst forms a catalyst packed bed in a reaction tube, and

wherein the catalyst has a honeycomb structure such that a packing volume ratio is 35 to 50 vol% when the catalyst packed bed is formed.

<2> The catalyst described in <1>, including the carrier carrying the component containing at least one kind selected from the group consisting of ruthenium and ruthenium compounds in an amount of 2 mass% or larger in terms of metal ruthenium.

<3> A catalyst, including a titanium oxide-containing carrier carrying a component containing ruthenium acid.

<4> A catalyst precursor, including a titanium oxide-containing carrier carrying a component containing alkali metal ruthenate.

<5> A method of producing a catalyst including a titanium oxide-containing carrier carrying a component containing at least one kind selected from the group consisting of ruthenium and ruthenium compounds,
the method including the following steps (1) and (2):

Step (1): a step of bringing a titanium oxide-containing carrier into contact with a solution containing an alkali metal ruthenate and water; and
Step (2): a step of bringing the carrier containing titanium oxide and alkali metal ruthenate prepared in Step (1) into contact with an acid aqueous solution.

<6> A catalyst packed reaction tube, including a catalyst packed bed packed with a catalyst, the catalyst including a titanium oxide-containing carrier carrying a component containing at least one kind selected from the group consisting of ruthenium and ruthenium compounds,
wherein a packing volume ratio of the catalyst in the catalyst packed bed is from 35 to 50 vol%.

<7> A method of decomposing nitrous oxide, which includes the step of bringing the catalyst described in any one of <1> to <3> into contact with a nitrous oxide-containing gas containing nitrous oxide.

<8> The method of decomposing nitrous oxide described in <7>, wherein the nitrous oxide-containing gas includes at least one gas selected from the group consisting of nitrogen, carbon monoxide, carbon dioxide, water vapor, oxygen, hydrogen, ammonia, nitrogen monoxide, nitrogen dioxide and hydrocarbons.

<9> The method of decomposing nitrous oxide described in <7> or <8>, wherein the nitrous oxide-containing gas is a gas discharged from a chemical production plant.

<10> A method of decomposing nitrous oxide, which includes the step of allowing a nitrous oxide-containing gas containing nitrous oxide to flow through the catalyst packed reaction tube described in <6>.

<11> The method of decomposing nitrous oxide described in <10>, wherein the nitrous oxide-containing gas includes at least one gas selected from the group consisting of nitrogen, carbon monoxide, carbon dioxide, water vapor, oxygen, hydrogen, ammonia, nitrogen monoxide, nitrogen dioxide and hydrocarbons.

<12> The method of decomposing nitrous oxide described in <10> or <11>, wherein the nitrous oxide-containing gas is a gas discharged from a chemical production plant.

ADVANTAGEOUS EFFECTS OF INVENTION

The catalyst and the catalyst packed reaction tube of the present invention are used in the method of decomposing nitrous oxide, and thus nitrous oxide can be efficiently decomposed. In addition, the catalyst precursor and the production method of the present invention can produce the catalyst of the present invention exhibiting the excellent characteristics described above. Furthermore, the method of decomposing nitrous oxide of the present invention can efficiently decompose nitrous oxide.

DESCRIPTION OF EMBODIMENTS

A numerical value range indicated by using the term "to" in the present invention herein means a range including the numerical values described before and after the term "to" as the lower limit value and the upper limit value, respectively.

[Catalyst]

The catalyst of the present invention includes a titanium oxide-containing carrier carrying a component containing at least one kind selected from the group consisting of ruthenium and ruthenium compounds. In addition, this catalyst is packed in a catalyst packed area of a reaction tube as described later to form a catalyst packed bed, and the catalyst has a honeycomb structure such that a packing volume ratio is from 35 to 50 vol% in this case. The catalyst of the present invention is used in a decomposition reaction of nitrous oxide, and thus nitrous oxide can be efficiently decomposed.

First, the composition of the catalyst of the present invention will be described.

As used herein, the "catalyst including a titanium oxide-containing carrier carrying a component containing at least one kind selected from the group consisting of ruthenium and ruthenium compounds" means a catalyst in which a component containing at least one kind selected from the group consisting of ruthenium and ruthenium compounds is attached to the surface and/or pores of a titanium oxide-containing carrier.

In the present invention, at least one kind selected from the group consisting of ruthenium and ruthenium compounds is selected as the component supported on the carrier from the viewpoint of balance between catalytic activity and cost.

(Ruthenium compound)

Examples of the ruthenium compound include, but are not particularly limited to, ruthenium oxide, ruthenium hydroxide, ruthenium nitrate, ruthenium chloride, ruthenium acid, chlororuthenate, chlororuthenate hydrate, a salt of ruthenium acid, ruthenium oxychloride, a salt of ruthenium oxychloride, a ruthenium ammine complex, a ruthenium ammine complex chloride, ruthenium bromide, a ruthenium carbonyl complex, a ruthenium organic acid salt, and a ruthenium nitrosyl complex.

Examples of the ruthenium oxide include $RuO_2$.

Examples of the ruthenium hydroxide include $Ru(OH)_3$.

Examples of the ruthenium nitrate include $Ru(NO_3)_3$.

Examples of the ruthenium chloride include $RuCl_3$ and $RuCl_3$ hydrate.

Examples of the ruthenium acid include $H_2RuO_4$.

Examples of the chlororuthenate include a salt having $[RuCl_6]^{3-}$ as an anion, such as $K_3RuCl_6$, and a salt having $[RuCl_6]^{2-}$ as an anion, such as $K_2RuCl_6$, $(NH_4)_2RuCl_6$.

Examples of the chlororuthenate hydrate include a salt hydrate having $[RuCl_5(H_2O)_4]^{2-}$ as an anion and a salt hydrate having $[RuCl_2(H_2O)_4]^+$ as a cation.

The salt of ruthenium acid includes a salt of $Ru^{VI}O_4^{2-}$ (tetraoxoruthenium (VI) acid ion) and a salt of $Ru^{VII}O_4^-$ (perruthenium acid ion, tetraoxoruthenium (VII) acid ion). Examples of the cation forming a salt include a cation of an alkali metal element, a cation of an alkaline earth metal element, $Ag^+$, and an ammonium cation. Among them, alkali metal salts of ruthenium acid (each salt of Li, Na, K, Rb, and Cs) are preferable, and Na salts or K salts of ruthenium acid are more preferable. Specific examples thereof include $Na_2RuO_4$ and $K_2RuO_4$.

Examples of the ruthenium oxychloride include $Ru_2OCl_4$, $Ru_2OCl_5$, and $Ru_2OCl_6$.

Examples of the salt of ruthenium oxychloride include $K_2Ru_2OCl_{10}$ and $Cs_2Ru_2OCl_4$.

Examples of the ruthenium ammine complex include a complex having $[Ru(NH_3)_6]^{2+}$, $[Ru(NH_3)_6]^{3+}$, or $[Ru(NH_3)_5H_2O]^{2+}$ as a complex ion.

Examples of the chloride of ruthenium ammine complex include a complex having $[Ru(NH_3)_5Cl]^{2+}$ as a complex ion, and $[Ru(NH_3)_6]Cl_2$, $[Ru(NH_3)_6]Cl_3$, and $[Ru(NH_3)_6]Br_3$.

Examples of the ruthenium bromide include $RuBr_3$ and $RuBr_3$ hydrate.

Examples of the ruthenium carbonyl complex include $Ru(CO)_5$ and $Ru_3(CO)_{12}$.

Examples of the ruthenium organic acid salt include $[Ru_3O(OCOCH_3)_6(H_2O)_3]OCOCH_3$ hydrate and $Ru_2(RCOO)_4Cl$ (R = an alkyl group having 1 to 3 carbon atoms).

Examples of the ruthenium nitrosyl complex include $K_2[RuCl_5NO]$, $[Ru(NH_3)_5(NO)]Cl_3$, $[Ru(OH)(NH_3)_4(NO)](NO_3)_2$, and $Ru(NO)(NO_3)_3$.

The ruthenium compound is preferably ruthenium oxide, ruthenium nitrate, ruthenium chloride, ruthenium bromide, ruthenium acid, a salt of ruthenium acid, or a ruthenium nitrosyl complex, and more preferably ruthenium oxide or ruthenium acid.

The component supported on the titanium oxide-containing carrier may contain at least one kind selected from the group consisting of ruthenium and ruthenium compounds, and may further contain, for example, a metal other than ruthenium and/or a metal compound other than the ruthenium compounds.

In the present invention, it is preferable that the catalyst is a catalyst including the titanium oxide-containing carrier further carrying at least one kind selected from the group consisting of metals other than ruthenium and metal compounds other than ruthenium compounds for the purpose of preventing a catalyst poisoning-causing substance from being adsorbed on the catalyst surface, preventing the performance of the catalyst from deteriorating, or preventing sintering of the catalytic active point.

Examples of the metal other than ruthenium include, but are not particularly limited to, silicon, zirconium, aluminum, niobium, tin, copper, iron, cobalt, nickel, vanadium, chromium, molybdenum, tungsten, manganese, antimony, and tellurium. Examples of the metal compound other than ruthenium compounds include, but are not particularly limited to, a compound having a metal other than ruthenium. Preferred is an oxide of the metal other than ruthenium. The metal oxide may be a composite oxide containing a plurality of metal species. In addition, the catalyst may be a catalyst including the carrier further carrying an alloy of ruthenium and a metal other than ruthenium and/or a composite oxide containing ruthenium and a metal other than ruthenium.

The catalyst is more preferably a catalyst including the carrier that contains titanium oxide in rutile crystal form and further carries at least one oxide selected from the group consisting of silicon oxide, zirconium oxide, aluminum oxide, niobium oxide, manganese oxide, antimony oxide, tellurium oxide, and tin oxide.

The metal salt used for obtaining the metal oxide is not particularly limited.

The content of at least one kind selected from the group consisting of ruthenium and ruthenium compounds in the catalyst is not particularly limited and is set, if appropriate. For example, the content is preferably from 1 to 20 mass%, more preferably from 2 to 10 mass%, and still more preferably from 2 to 5 mass% in terms of metal ruthenium.

The content of at least one kind selected from the group consisting of ruthenium and ruthenium compounds in terms of metal ruthenium is preferably from 1 to 20 mass%, more preferably from 2 to 10 mass%, and still more preferably from 2 to 5 mass% based on the total 100 mass% of the carrier and the component containing at least one kind selected from the group consisting of ruthenium and ruthenium compounds.

The contents of the metal other than ruthenium, the metal compound other than ruthenium compounds, and others in the catalyst are not particularly limited, and can be set, if appropriate, depending on the above purpose in consideration of the above content (carrying amount).

(Carrier)

The carrier may be any carrier as long as it contains titanium oxide, and may contain, for instance, another compound(s) described later. The crystal form of titanium oxide constituting the carrier is not particularly limited, and may be any of a rutile crystal form, an anatase crystal form, or a brookite crystal form. In the present invention, the carrier is preferably composed of titanium oxide and contains titanium oxide in a rutile crystal form. From the viewpoint of catalytic activity, the content of titanium oxide in a rutile crystal form in the titanium oxide contained in the carrier is preferably 20 mass% or larger, more preferably 30 mass% or larger, still more preferably 80 mass% or larger, and still more preferably 90 mass% or larger based on total 100 mass% of the titanium oxide contained in the carrier.

In the present invention, the titanium oxide containing titanium oxide in a rutile crystal form refers to titanium oxide containing a rutile crystal among rutile crystals and anatase crystals, the ratio of which is measured by X-ray diffraction analysis. Various radiation sources are used as the X-ray source. Examples thereof include copper $K\alpha$ radiation. In the case of using copper Ka radiation, the ratio of rutile crystals and the ratio of anatase crystals are determined using the intensity of a diffraction peak at $2\theta = 27.5$ degrees in the (110) plane and the intensity of a diffraction peak at $2\theta = 25.3$ degrees in the (101) plane,

respectively. The carrier used in the present invention is a carrier having a peak intensity of rutile crystal and a peak intensity of anatase crystal, or a carrier having a peak intensity of rutile crystal. That is, the carrier may have both the diffraction peak of rutile crystal and the diffraction peak of anatase crystal, or may have only the diffraction peak of rutile crystal.

Examples of other compounds that may be contained in the carrier include metal oxides other than titanium oxide, composite oxides of titanium oxide and other metal oxides, or mixtures of titanium oxide and other metal oxides. Examples of the metal oxide other than titanium oxide include aluminum oxide, silicon oxide, and zirconium oxide.

Titanium oxide prepared by a known method may be used, and commercially available products may also be used.

Examples of the method for preparing titanium oxide in a rutile crystal form include the following methods:

a method in which titanium tetrachloride is added dropwise to ice-cooled water and dissolved, and neutralized with an aqueous ammonia solution at a temperature of 20°C or higher to produce titanium hydroxide (orthotitanic acid), and, the generated precipitate was washed with water to remove chlorine ions, and is calcinated at a temperature of 600°C or higher (Catalyst Preparation Chemistry, 1989, p. 211, Kodansha Ltd.);

a method in which an oxygen-nitrogen mixed gas is made to pass through a titanium tetrachloride evaporator to prepare a reaction gas, and the resulting gas is introduced into a reactor and reacted at 900°C or higher (Catalyst Preparation Chemistry, 1989, p. 89, Kodansha Ltd.);

a method in which titanium tetrachloride is hydrolyzed in the presence of ammonium sulfate and then calcinated (e.g., Catalyst Engineering Course, Handbook of Catalysts Using Any of 10 Elements, 1978, p. 254, Chijinshokan, Co. Ltd.);

a method for calcinating titanium oxide in an anatase crystal form (e.g., Metal Oxides and Composite Oxides, 1980, p. 107, Kodansha Ltd.);

a method for thermally hydrolyzing a titanium chloride aqueous solution; and

a method in which a titanium compound (e.g., titanium sulfate, titanium chloride)-containing aqueous solution is mixed with rutile crystalline titanium oxide powder, the mixture is subsequently subjected to thermal hydrolysis or alkali hydrolysis, and then calcinated at a temperature around 500°C.

The carrier can be obtained by molding, for instance, titanium oxide into a desired shape. When the carrier contains, for instance, a compound other than titanium oxide, the carrier can be obtained by molding a mixture of titanium oxide and another compound(s) into a desired shape.

Subsequently, for example, the shape of the catalyst of the present invention will be described.

The shape of the catalyst (carrier) is not particularly limited, and can be set, if appropriate.

In a preferred embodiment of the present invention, when the catalyst is packed in a catalyst packed area of a reaction tube as described later to form a catalyst packed bed, a honeycomb shape (honeycomb structure) satisfying a packing volume ratio as described later is formed.

On the other hand, in another preferred embodiment of the present invention, for example, a catalyst carrying a component containing ruthenium acid may have various shapes. The shapes are not particularly limited, and examples thereof include spherical particles, cylindrical pellets, a ring shape, a honeycomb shape, a monolith shape, a corrugated shape, or microparticles or granules with a suitable size as pulverized and classified after molding. Preferable examples of the shape of the catalyst include spherical particles, cylindrical pellets, a ring shape, a honeycomb shape, a monolith shape, a corrugated shape, or granules. More preferable examples thereof include a ring shape and a honeycomb shape from the viewpoint of decomposition efficiency of nitrous oxide.

In the present invention, the honeycomb structure refers to a "honeycomb structure" that is ordinarily meant as, for example, a honeycomb catalyst frequently used as an exhaust gas purifying catalyst. The honeycomb structure is, for example, a structure in which a plurality of through holes is densely arranged in a planar direction and punched in a substrate, such as a columnar body.

The shape of the substrate is selected, if appropriate, according to, for example, the shape of the catalyst packed area of the reaction tube and the packing mode of the honeycomb structure. Examples thereof include a columnar body, a block body, and a plate body. The shape of the opening of the through holes is not particularly limited, and examples thereof include a polygon such as a quadrangle and a hexagon; a circle; and an ellipse. The arrangement of the through holes is not particularly limited, and is determined, if appropriate, in consideration of, for example, the shape of the opening. For example, the arrangement is a straight (parallel) arrangement, a staggered arrangement, or a honeycomb arrangement, in the planar direction (ordinarily, a plane perpendicular to the axis) of the substrate.

Examples of the honeycomb structure described above include a circular hole parallel arrangement, a circular hole staggered arrangement, and a circular hole honeycomb arrangement in which the opening shape of the through holes is circular; a rectangular hole parallel arrangement, a rectangular hole staggered arrangement, and a rectangular hole honeycomb arrangement in which the opening shape of the through holes is polygonal.

The size of the catalyst (carrier) is not particularly limited, and can be set, if appropriate.

When the catalyst has a spherical particle shape or a cylindrical pellet shape, the catalyst diameter is preferably 10 mm or less from the viewpoint of catalytic activity. Note that the catalyst diameter herein means the diameter of a sphere in the case of spherical particles, the diameter of a cross section in the case of cylindrical pellets, or the maximum diameter of a cross section in the case of other shapes.

In a preferred embodiment of the present invention described above, the size of the catalyst is set to a size that satisfies a packing volume ratio described later when the catalyst is packed in the catalyst packed area of the reaction tube described later to form a catalyst packed bed. For example, in the size conforming to the catalyst packed area of the reaction tube, ordinarily, external dimensions are substantially the same as internal dimensions (inner diameter and length) of the catalyst packed area.

The opening diameter (also referred to as a cell size) of the through holes, the distance between the through holes (also referred to as a thickness of the inner wall), and the opening ratio in the honeycomb structure are determined, if appropriate. In a preferred embodiment of the present invention, they are determined in consideration of, for example, the packing volume ratio. For example, the cell size may be from 1 to 3 mm, preferably from 1 to 2 mm. The thickness of the inner wall may be from 0.1 to 2 mm, preferably from 0.2 to 1 mm. The opening ratio ([[(total area of through holes opened in surface of honeycomb structure)/(apparent surface area of honeycomb structure)] $\times$ 100 (%)) may be from 50 to 65%, preferably from 50 to 62%. The cell size and the thickness of the inner wall can be measured by observing and measuring the honeycomb-shaped surface. The opening ratio can be calculated from the measured total area of the through holes and the calculated apparent surface area.

In a preferred embodiment of the present invention described above, the catalyst has a honeycomb structure such that a packing volume ratio is from 35 to 50 vol% when the catalyst is packed in the catalyst packed area of the reaction tube described later to form a catalyst packed bed. The packing volume ratio is preferably from 38 to 50 vol% from the viewpoint of further increasing the efficiency of decomposing nitrous oxide. The packing volume ratio of the honeycomb structure (catalyst) refers to a proportion (percentage) of the actual volume of the honeycomb structure with respect to the apparent volume of the honeycomb structure. Here, the apparent volume of the honeycomb structure is ordinarily synonymous with the volume of the catalyst packed area of the reaction tube. The apparent volume and the actual volume can be calculated from each size of the honeycomb structure by an ordinarily method.

In the present invention, the catalyst includes a mode having a honeycomb structure satisfying the packing volume ratio by combining a plurality of catalysts (mode of forming a honeycomb structure in which a plurality of catalysts packed in a catalyst packed area satisfies the packing volume ratio as a whole). Preferably, the catalyst has a honeycomb structure satisfying the packing volume ratio alone. In this case, the packing volume ratio indicates a catalyst packing ratio of the catalyst alone, and is synonymous with the proportion (percentage) of the actual volume with respect to the apparent volume. In addition, when a plurality of catalysts is combined, the honeycomb structure of each of the catalysts preferably satisfies the packing volume ratio.

[Method of producing catalyst]

The catalyst may be prepared by a method including: impregnating a titanium oxide-containing carrier with a solution containing at least one kind selected from the group consisting of ruthenium and ruthenium compounds; attaching, to the carrier, a component containing at least one kind selected from the group consisting of ruthenium and ruthenium compounds; and then drying the carrier.
As the carrier, carriers molded into various shapes described in the shape of the catalyst may be used. Alternatively, the carrier may be allowed to carry the above component, pulverized, and molded into the above-described catalyst shapes.
The solvent in the solution containing the component containing at least one kind selected from the group consisting of ruthenium and ruthenium compounds is not particularly limited. The solvent used may be, for instance, water and/or ethanol. After drying, the resulting carrier may be calcined.
When the catalyst contains ruthenium oxide, for example, the catalyst can be obtained by a method including the steps of: impregnating a titanium oxide-containing carrier with a solution containing ruthenium halide to support the ruthenium halide on the carrier; drying the carrier material supported on the ruthenium halide-carrying carrier; and calcinating the dried product.
The catalyst may be diluted with an inert substance and then used.
In the present invention, a preferred example of the method of producing a catalyst includes a production method including the following steps (1) and (2).

Step (1): A step of bringing a titanium oxide-containing carrier into contact with a solution containing an alkali metal ruthenate and water.
Step (2): A step of bringing the carrier containing titanium oxide and alkali metal ruthenate prepared in Step (1) into contact with an acid aqueous solution.

<Step (1)>

The carrier and the alkali metal ruthenate used in Step (1) are as described above.
The content of alkali metal ruthenate in the solution containing alkali metal ruthenate and water is not particularly limited, and is preferably from 1 to 10 mass%, more preferably from 2 to 8 mass%, and still more preferably from 3 to 6 mass% in terms of metal ruthenium. This solution may contain a component other than alkali metal ruthenate. Examples thereof include a metal other than ruthenium described in the component supported on the carrier, and an organic solvent for mixing the solution with the carrier, such as an alcohol.
The contact method and conditions in Step (1) are not particularly limited, and can be set, if appropriate. As for the contact method, various methods of allowing, for example, the component containing ruthenium to be supported on a carrier may be used as the method of producing a catalyst. Examples thereof include a method of immersing a carrier in a solution, and a coating method of spraying a solution to a carrier. The amount of the solution used in this case is preferably from 0.1 to 20 mL, more preferably from 0.3 to 10 mL, based on 1 g of the carrier. The contact conditions include, for example, a condition of contact at 5 to 40°C (preferably 10 to 30°C) for 1 to 60 minutes (preferably 5 to 20 minutes).
In this manner, the alkali metal ruthenate is supported or adsorbed on the titanium oxide-containing carrier to prepare a carrier containing titanium oxide and alkali metal ruthenate.
The carrier containing titanium oxide and alkali metal ruthenate prepared in Step (1) corresponds to the catalyst precursor of the present invention.

<Step (2)>

In Step (2), an acid aqueous solution is used. The acid used for preparing the acid aqueous solution is not particularly limited, and is ordinarily an inorganic acid from the viewpoint of reactivity with alkali metal ruthenate. Examples thereof include nitric acid, hydrochloric acid, sulfuric acid, and phosphoric acid, and nitric acid is preferable.
The content (concentration) of the acid in the acid aqueous solution is not particularly limited. For example, the content is preferably from 0.1 to 10 N (defined), more preferably from 0.2 to 5 **N,** and still more preferably from 0.5 to 2 N.

The acid aqueous solution may contain a component other than the acid.

The contact method in Step (2) is not particularly limited. For example, the contact method in Step (1) may be used, if appropriate. The amount of the acid aqueous solution used in this case is determined, if appropriate, in consideration of the content of the acid. For example, the amount of the acid used is preferably from 1 to 200 mol, more preferably from 5 to 50 mol, based on 1 mol of alkali metal ruthenate. The contact conditions are set to conditions in which alkali metal ruthenate reacts with acid. Examples thereof include a condition of contact at 10 to 100°C (preferably 20 to 80°C) for 1 to 60 minutes (preferably 5 to 20 minutes). Examples of the contact method at a temperature equal to or higher than room temperature include a method in which the carrier and/or the acid aqueous solution to be used is heated a predetermined temperature in advance, and a method in which the carrier and the acid aqueous solution are brought into contact with each other and then heated.

In this way, the alkali metal ruthenate supported on the carrier can be acidolyzed into ruthenium acid, thereby producing a catalyst carrying a component containing ruthenium acid.

<Other steps>

The method of producing a catalyst of the present invention may have a step(s) other than Step (1) and Step (2). Examples include: a step of molding a carrier; a step of drying the carrier containing titanium oxide and alkali metal ruthenate prepared in Step (1); a step of drying the catalyst prepared in Step (2); and a step of further calcinating the catalyst.

The step of molding a carrier is not particularly limited as long as the carrier can be molded into the above-described shapes. In the present invention, the carrier is preferably molded into the above-described honeycomb structure.

The method and conditions in the drying step can be applied without particular limitation to the ordinarily method and conditions. Examples thereof include air drying, air blow drying, and heat drying at 5 to 120°C.

The method and conditions in the calcinating step can be applied without particular limitation to the ordinarily method and conditions, and examples thereof include heat treatment at 120°C to 400°C under a gas containing oxygen or an inert gas atmosphere.

[Catalyst packed reaction tube]

The catalyst packed reaction tube of the present invention includes the catalyst packed bed packed with the catalyst of the present invention as described above, in which the packing volume ratio of the catalyst in the catalyst packed bed is set to 35 to 50 vol%. In this catalyst packed reaction tube, the reaction gas supplied to the reaction tube can be treated by the catalyst (catalyst packed bed) packed in the catalyst packed reaction tube, and nitrous oxide can be efficiently decomposed when the nitrous oxide-containing gas is treated.

The shape and size and the like of the catalyst packed reaction tube are set, if appropriate. Examples of the shape of the catalyst packed reaction tube used in a continuous contact method include a tubular or tower-type reaction tube, such as a metal tube and a column tower. The cross-sectional shape of the reaction tube is ordinarily a circular ring shape, and may be, for example, a prismatic torus shape. The size of the catalyst packed reaction tube and the catalyst packed area cannot be unequivocally determined using the reaction scale, the reaction conditions and others. However, the inner diameter may be, for example, from 5 to 10000 mm, preferably from 20 to 5000 mm. Similarly, the length of the catalyst packed area cannot be unequivocally determined. However, the length may be, for example, from 5 to 45000 mm, preferably from 20 to 11250 mm. The material forming the reaction tube may be any material as long as it has resistance to a reaction gas, for example, a nitrous oxide-containing gas described later. Examples of the material include a material containing iron, such as stainless steel or glass, as a main component.

The catalyst packed in the catalyst packed reaction tube is as described above, and is packed in a state of satisfying the packing volume ratio depending on, for example, the shape and size of the catalyst. For example, in a preferred embodiment of the present invention, the catalyst is packed (arranged) in the catalyst packed area with axes of through holes of the honeycomb structure being along the axial direction of the reaction tube. Here, the term "axes of through holes of the honeycomb structure being along the axial direction of the reaction tube" is not limited to a mode of being parallel, and includes a mode in which the axes of the through holes are inclined at an angle of, for example, 45° or less with respect to the axial direction of the reaction tube. On the other hand, in another preferred embodiment of the present invention (when the catalyst does not have a honeycomb structure but has the cylindrical pellet shape described above), the shape and size of the catalyst are adjusted, if appropriate, and the catalyst packed area is packed so as to have the above-described packing volume ratio when the catalyst packed area is packed to form a catalyst packed bed.

The catalyst packed reaction tube is preferably used together with, for example, a heater for heating the catalyst packed reaction tube, a line (supply tube) for introducing a reaction gas into the catalyst packed reaction tube, a line (lead-out tube) for exhausting a post-reaction gas from the catalyst packed reaction tube.

[Method of decomposing nitrous oxide]

The method of decomposing nitrous oxide of the present invention (hereinafter, sometimes simply referred to as "the decomposition method of the present invention") includes the step of bringing the catalyst of the present invention into contact with a nitrous oxide-containing gas containing nitrous oxide (gas) (hereinafter, sometimes referred to as a contact step), or the step of allowing a nitrous oxide-containing gas containing nitrous oxide (gas) to flow through the catalyst packed reaction tube. This contact step or the step of allowing the gas to pass through, as described later, makes it possible to efficiently decompose nitrous oxide in the nitrous oxide-containing gas into nitrogen molecules (ordinarily nitrogen gas) and oxygen molecules (ordinarily oxygen gas).

<Catalyst>

The catalyst used in the decomposition method of the present invention is as described above, and the use form is not particularly limited. For example, it is preferable to use a catalyst having a honeycomb structure, and it is more preferable to use a catalyst packed reaction tube packed with a catalyst having a honeycomb structure.

<Nitrous oxide-containing gas>

The nitrous oxide-containing gas used in the contact step may be any gas as long as containing nitrous oxide, and may contain an inert gas as a dilution gas. The nitrous oxide-containing gas preferably contains nitrous oxide and at least one gas selected from the group consisting of nitrogen, carbon monoxide, carbon dioxide, water vapor, oxygen, hydrogen, ammonia, nitrogen monoxide, nitrogen dioxide, and hydrocarbons (including saturated hydrocarbons and unsaturated hydrocarbons). The content (concentration) of each gas in the nitrous oxide-containing gas is not particularly limited, and can be set, if appropriate. For example, the content may be the same as that of the preferred nitrous oxide-containing gas described later.

The nitrous oxide-containing gas may contain a liquid. In the decomposition method of the present invention, the nitrous oxide-containing gas only needs to be a gas at least while being in contact with the catalyst (under reaction conditions), and may be a liquid or a mixture of a gas and a liquid before contact.

The nitrous oxide-containing gas used in the preferred contact step described later (sometimes referred to as a preferred nitrous oxide-containing gas) may contain one kind or two or more kinds of gases other than nitrous oxide, water vapor and ammonia as long as the gas contain nitrous oxide, water vapor and ammonia. Examples of such a gas include each gas, such as oxygen, helium, argon, nitrogen and carbon dioxide, and a reducing gas described later.

The content (concentration) of each component in the preferred nitrous oxide-containing gas is not particularly limited and can be set, if appropriate. However, it is usually efficient to use the nitrous oxide-containing gas almost as it is while having a value specific to a factory from which the nitrous oxide-containing gas is discharged, except for a component having a special effect. Thus, for example, the mole concentration of nitrous oxide in the preferred nitrous oxide-containing gas is generally and preferably from 0.002 to 10 mol%. The mole concentration of water vapor is generally and preferably from 0.1 to 10 mol%. The mole concentration of ammonia in the preferred nitrous oxide-containing gas is preferably 0.0002 mol% or higher and preferably 1 mol% or less from the viewpoint of the efficiency of decomposing nitrous oxide. The mole concentration of ammonia is more preferably from 0.0002 to 0.5 mol%, and still more preferably from 0.0002 to 0.2 mol%.

The content ratio [ammonia/water vapor] of ammonia to water vapor contained in the preferred nitrous oxide-containing gas is not particularly limited and can be set, if appropriate. However, the content ratio is preferably 0.0010 or more as a molar ratio from the viewpoint of the efficiency of decomposing nitrous oxide. The molar ratio is more preferably from 0.0010 to 0.050, and more preferably from 0.0010 to 0.030, and still more preferably from 0.0010 to 0.010 from the viewpoint of potentially suppressing or avoiding the problem of remaining ammonia (discharging into the air and removal workability). In addition, the content ratio [ammonia/nitrous oxide] of ammonia to nitrous oxide contained in the preferred nitrous oxide-containing gas is not particularly limited and can be set, if appropriate. However, the content ratio is preferably from 0.005 to 10 as a molar ratio.

When the preferred nitrous oxide-containing gas contains an oxygen gas, the content of oxygen gas in the preferred nitrous oxide-containing gas is not particularly limited and can be set, if appropriate. However, the content is preferably 0.01 to 10000 mole times the content of ammonia in the preferred nitrous oxide-containing gas. When the preferred nitrous oxide-containing gas is free of oxygen gas, for example, the mixture can be obtained by mixing the preferred nitrous oxide-containing gas and an oxygen-containing gas. Examples of the oxygen-containing gas include air.

The preferred nitrous oxide-containing gas may also contain a reducing gas in order to further increase the efficiency of decomposing nitrous oxide. Similarly, in order to further increase the efficiency of decomposing nitrous oxide, it is possible to include a saturated hydrocarbon gas that is contained in the nitrous oxide-containing gas or reacts with oxygen generated in a reactor to be a raw material for generating a reducing gas such as a carbon monoxide gas. In view of the efficiency of decomposing nitrous oxide, a method of including a reducing gas in a preferred nitrous oxide-containing gas is preferable. The reducing gas may be any reducing gas other than ammonia, and those used in a general catalytic reduction method can be used without particular limitation. Examples thereof include an unsaturated hydrocarbon gas, such as ethylene, propylene, α-butylene and β-butylene, a carbon monoxide gas, a hydrogen gas, and a gas of alcohol compound, such as methanol, ethanol, propanol and butanol. Among them, at least one kind of a carbon monoxide gas, unsaturated hydrocarbon gas and hydrogen gas is preferable. Examples of the saturated hydrocarbon gas as a raw material for generating a reducing gas, such as a carbon monoxide gas include methane, ethane, propane, and n-butane. Examples of the preferred saturated hydrocarbon gas include ethane, propane, and n-butane. The saturated hydrocarbon gas may be included using a gas mixture, such as natural gas, liquefied natural gas, and liquefied petroleum gas.

The content of the reducing gas or the saturated hydrocarbon gas in the preferred nitrous oxide-containing gas is not particularly limited, and can be set, if appropriate. For example, the mole concentration of the reducing gas or the saturated hydrocarbon gas in the preferred nitrous oxide-containing gas is from 0.001 to 1 mol%. The molar ratio [reducing gas or saturated hydrocarbon gas/water vapor] of the reducing gas or the saturated hydrocarbon gas to water vapor in the preferred nitrous oxide-containing gas is preferably from 0.0003 to 0.03. In addition, the content ratio [reducing gas or saturated hydrocarbon gas/nitrous oxide] of the reducing gas or saturated hydrocarbon gas to nitrous oxide contained in the preferred nitrous oxide-containing gas is from 0.01 to 100 as a molar ratio.

The nitrous oxide-containing gas may be prepared by appropriately mixing nitrous oxide and water vapor, ammonia, and the above-mentioned other gases. In addition, various exhaust gases discharged from a chemical production plant can also be used. For example, a gas discharged from a chemical production plant, such as a nitric acid production plant, an ε-caprolactam production plant and an adipic acid production plant often contains, in addition to nitrous oxide, water vapor and ammonia, and further contains oxygen gas, and can be effectively utilized in the preferred contact step described later. In particular, the exhaust gas may satisfy, for instance, the content and the content ratio in the above ranges. This is preferable from the viewpoint that the exhaust gas, without adjusting the content, is applicable, as it is, to the preferred contact step.

<Contact step>

The contact step may be a step of bringing the catalyst into contact with a nitrous oxide-containing gas containing nitrous oxide, and a contact step in the known method of decomposing nitrous oxide may be used. Examples of the contact step in the known method of decomposing nitrous oxide include a method (step) described in Patent Literature 1 in which a catalyst and nitrous oxide are brought into contact with each other in the co-presence of a reducing gas. In addition, the contact step may also be performed by the step of allowing a nitrous oxide-containing gas containing nitrous oxide to flow through the catalyst packed reaction tube of the present invention. The contact step in the present invention is preferably a step of bringing the catalyst (catalyst packed in the catalyst packed reaction tube used in the step of allowing the gas to flow through) into contact with a nitrous oxide-containing gas containing nitrous oxide, water vapor, and ammonia (sometimes referred to as "preferred contact step").

The method of bringing the nitrous oxide-containing gas into contact with the catalyst is not particularly limited, and may be, for example, a batch type or a continuous type. Here, a continuous type is preferable from the viewpoint of reaction efficiency. Examples of the continuous type include a fixed bed type and a fluidized bed type.

In the contact step, nitrous oxide in the nitrous oxide-containing gas comes into contact with the catalyst. Accordingly, even in the co-presence of water vapor, a nitrous oxide-decomposing reaction shown in the following formula occurs. As a result, the nitrous oxide is efficiently decomposed into nitrogen molecules and oxygen molecules. Nitrous oxide-decomposing reaction:

$$N_2O \rightarrow N_2 + 1/2O_2$$

In the above preferred contact step, ammonia in the nitrous oxide-containing gas further promotes the nitrous oxide-decomposing reaction. Details of the mechanism of action are not yet clear, but are considered as follows. For example, in the presence of a catalyst exhibiting a reducing action, such as a ruthenium-carrying catalyst, it is presumed that ammonia reacts with nitrous oxide on the surface of the catalyst, whereby nitrous oxide is decomposed into nitrogen molecules and water molecules to be able to further promote the nitrous oxide-decomposing reaction. On the other hand, in the presence of a catalyst that does not exhibit a reducing action, such as a ruthenium oxide-carrying catalyst, it is presumed that oxygen atoms are removed from the catalyst surface by reacting with oxygen atoms remaining on the catalyst surface to maintain the catalytic activity (suppress deactivation of the catalyst), so that the decomposition reaction can be promoted.

When a known step is applied as the contact step, an appropriate method and conditions that can be employed in each step can be used, if appropriate, as the contact method and the contact conditions.

Examples of the contact conditions in the preferred contact step include, but are not particularly limited to, the following conditions. The contact temperature (reaction temperature) is determined, if appropriate, but is preferably 500°C or lower from the viewpoint of catalyst activity deterioration, and is preferably 100°C or higher from the viewpoint of reaction rate. The contact temperature is preferably from 200 to 450°C and more preferably from 250 to 400°C. In the continuous contact method, the rate of supplying the nitrous oxide-containing gas with respect to the weight of the catalyst is not particularly limited and is determined, if appropriate. For example, the flow rate at 0°C and 0.1013 MPa (absolute) based on 1 g of the catalyst is preferably from 10 to 10000 $cm^3$/min and more preferably from 50 to 5000 $cm^3$/min. The contact time is determined, if appropriate, according to the concentration of nitrous oxide in the nitrous oxide-containing gas or its supply rate, the contact temperature, and others. The reaction pressure varies depending on, for instance, the contact temperature, the rate of supplying the nitrous oxide-containing gas, or the pressure of the outside air around the reactor. The reaction pressure is preferably a pressure higher than the outside air pressure, and is preferably from 0.08 to 1 MPa (absolute) as an absolute pressure, and more preferably from 0.09 to 0.7 MPa (absolute) as an absolute pressure.

<Other steps>

The decomposition method of the present invention may include a step(s) other than the contact step. Examples thereof include a step of adjusting the content of a component(s) in the nitrous oxide-containing gas and/or a step of introducing an oxygen gas or a reducing gas into the nitrous oxide-containing gas.

The decomposition method of the present invention can efficiently decompose nitrous oxide. In particular, in the continuous type, circulation (flow) of the nitrous oxide-containing gas through the catalyst efficiently enables the decomposition of nitrous oxide, thereby capable of reducing emission of nitrous oxide. For example, in Examples described later, a high concentration reduction rate of 50% or larger, preferably 70% or larger, can be achieved as the rate of decreasing nitrous oxide concentration in the reaction gas, and a high decomposition rate of 3.0/second or longer, preferably 5.0/second or longer, can be achieved as the rate of decomposing nitrous oxide. Further, in a preferred contact step, ammonia in the nitrous oxide-containing gas can also be efficiently decomposed, so that the discharge of ammonia can be suppressed.

The present decomposition method can be used in various fields and applications for decomposing and removing nitrous oxide. For example, the method can be used in a chemical production plant. In particular, they can be suitably used in a chemical production plant, such as a nitric acid production plant, an ε-caprolactam production plant and an adipic acid production plant, that discharges a gas containing nitrous oxide, ammonia and water vapor.

When the present decomposition method is applied to an existing production plant, the position, where the apparatus for implementing the present decomposition method is installed, is not particularly limited. Here, the decomposition apparatus is usually incorporated in the last stage in the flowing direction of the exhaust gas, for example, in a stage before the discharge tower. Specifically, in the case of a nitric acid production plant, the apparatus is incorporated in a stage after the denitration reactor.

EXAMPLES

Hereinafter, Examples of the present invention will be described. The present invention, however, is not limited thereto.

[Example 1] Production of catalyst

<Example 1-1: Preparation of $H_2RuO_4$/$TiO_2$ catalyst 1>

A $H_2RuO_4$/$TiO_2$ catalyst 1 was produced as follows.

A titanium oxide molded precursor 1 (cubic shape having a length of 20 mm, a width of 20 mm, and a height of 20 mm; through holes arranged in parallel in the vertical and horizontal directions; opening shape of the through holes: quadrangle; cell size: 1.3 mm; inner wall thickness: 0.5 mm; opening ratio: 50%) obtained by extruding titanium oxide powder (manufactured by Showa Denko K. K.) into a honeycomb shape was calcinated at 600°C for 2 hours by using an electric furnace to obtain a titanium oxide-made carrier 1 (specific surface area: 15 $m^2$/g; 100% rutile crystalline form). The specific surface area of the carrier 1 was measured by a BET 1-point method by nitrogen adsorption at 77 K.

The carrier 1 retained the shape and size of the titanium oxide molded precursor 1. The size of the titanium oxide molded precursor 1 was measured or calculated as described above (the same applies hereinafter.).

Next, the carrier 1 was immersed in about 50 mL of sodium ruthenate aqueous solution ($Na_2RuO_4$ aqueous solution, manufactured by Furuya Metal Co., Ltd., about 15°C) prepared to have a Ru content of 5.7 mass%. After 10 minutes, the carrier 1 was pulled up from the sodium ruthenate aqueous solution, and excess moisture was blown off by air blow. The obtained carrier 1 was allowed to stand on a laboratory table at room temperature (about 15°C) and air-dried until the weight loss disappeared. Thus, a catalyst precursor 1 was obtained.

The obtained catalyst precursor 1 was heated to about 60°C in an oil bath, and immersed in a 2 N nitric acid aqueous solution stirred with a stir bar. After no generation of bubbles were observed, the catalyst precursor 1 was pulled up and air-dried at room temperature (about 15°C) until the weight loss disappeared. Thus, the $H_2RuO_4/TiO_2$ catalyst 1 having a honeycomb structure was produced. The catalyst 1 retained the shape and size of the titanium oxide molded precursor 1.

<Example 1-2: Production of $H_2RuO_4/TiO_2$ catalyst 2>

A $H_2RuO_4/TiO_2$ catalyst 2 having a honeycomb structure was produced in the same manner as in Example 1 except that a titanium oxide molded precursor 2 (cubic shape having a length of 19 mm, a width of 19 mm, and a height of 20 mm; through holes arranged in parallel in the vertical and horizontal directions; opening shape of the through holes: quadrangle; cell size: 1.0 mm; inner wall thickness: 0.25 mm; opening ratio: 62%) was used. The catalyst 2 retained the shape and size of the titanium oxide molded precursor 2.

<Example 1-3: Production of $RuO_2/TiO_2$ catalyst 3>

A $RuO_2/TiO_2$ catalyst 3 was produced as follows.

A titanium oxide molded precursor 1 (cubic shape having a length of 20 mm, a width of 20 mm, and a height of 20 mm; through holes arranged in parallel in the vertical and horizontal directions; opening shape of the through holes: quadrangle; cell size: 1.3 mm; inner wall thickness: 0.5 mm; opening ratio: 50%) obtained by extruding titanium oxide powder (manufactured by Showa Denko K. K.) into a honeycomb shape was calcinated at 600°C for 2 hours by using an electric furnace to obtain a titanium oxide-made carrier 1 (specific surface area: 15 $m^2/g$; 100% rutile crystalline form). The specific surface area of the titanium oxide-made carrier 1 was measured by a BET 1-point method using nitrogen adsorption at 77 K. This carrier 1 retained the shape and size of the titanium oxide molded precursor 1.

The carrier 1 was immersed in about 50 mL of ruthenium chloride aqueous solution prepared using $RuCl_3 \cdot nH_2O$ (manufactured by Furuya Metal Co., Ltd., Ru content: 40 mass%) to have a Ru content of 5.7 mass%. After 10 minutes, the carrier 1 was pulled up from the ruthenium chloride aqueous solution, and excess moisture was blown off by air blow. Thereafter, the obtained carrier 1 was allowed to stand on a laboratory table at room temperature (about 15°C) and air-dried until the weight loss disappeared. Thus, a catalyst precursor 3 was obtained.

The obtained catalyst precursor 3 was packed in a quartz glass tube provided with a sheath tube for measuring an internal temperature. The temperature was then raised to a furnace temperature of 275°C under air flow at 500 $cm^3$ (0°C, 0.1013 MPa (absolute))/min by using an electric tube furnace. Subsequently, the precursor was held at the same temperature for 2 hours for calcination. The calcinated catalyst precursor 3 was immersed in 130 g of 19 mass% potassium iodide aqueous solution at room temperature for 1 hour, and then immersed in 150 g of ion-exchanged water at room temperature 6 times for washing. The obtained solid was allowed to stand on a laboratory table at room temperature (about 15°C) and air-dried until the weight loss disappeared. Thus, the $RuO_2/TiO_2$ catalyst 3 having a honeycomb structure was obtained.

<Example 1-4: Production of $RuO_2/TiO_2$ catalyst 4>

A $RuO_2/TiO_2$ catalyst 4 having a honeycomb structure was produced in the same manner as in Example 3 except that a ruthenium chloride aqueous solution adjusted to have a Ru content of 2.9 mass% was used.

<Comparative Example 1-1: Production of $RuO_2/TiO_2$ catalyst C1>

A $RuO_2/TiO_2$ catalyst C1 was produced as follows.

Titanium oxide moldings (cylindrical pellets having a diameter of 3 mm and a length of 3 to 6 mm) obtained by extruding titanium oxide powder (manufactured by Showa Denko K. K.) were calcinated at 600°C for 3 hours by using a muffle furnace to obtain a titanium oxide-made carrier (specific surface area: 15 $m^2/g$; 100% rutile crystal form). The specific surface area of the titanium oxide-made carrier was measured by a BET 1-point method using nitrogen adsorption at 77 K.

First, 0.76 g of ruthenium chloride hydrate ($RuCl_3 \cdot nH_2O$; Ru content: 40 mass%; manufactured by Furuya Metal Co., Ltd.) was dissolved in 2.0 g of ion-exchanged water. The resulting solution was impregnated into 9.7 g of titanium oxide-made carrier by an incipient wetness method, and the resulting material was then air-dried at room temperature (15°C) overnight in an air atmosphere to obtain each titanium oxide solid carrying ruthenium chloride hydrate.

The obtained titanium oxide solid was packed in a quartz glass tube provided with a sheath tube for measuring an internal temperature. The temperature was then raised to a quartz glass tube temperature of 275°C under air flow at 200 $cm^3$ (0°C, 0.1013 MPa (absolute))/min by using an electric tube furnace. Subsequently, the solid was held at the same temperature for 2 hours for calcination to obtain 10 g of the $RuO_2/TiO_2$ catalyst C1 having a cylindrical pellet shape and containing ruthenium oxide.

<Comparative Example 1-2: Production of $RuO_2/TiO_2$ catalyst C2>

A $RuO_2/TiO_2$ catalyst C2 was produced as follows.

The $RuO_2/TiO_2$ catalyst C1 was crushed in a magnetic mortar, and sieved to have a size of the crushed product of 0.5 mm or larger and less than 1 mm. Thus, the $RuO_2/TiO_2$ catalyst C2 was obtained.

Example 2: Decomposition of nitrous oxide

<Examples 2-1 to 2-4>

(Production of catalyst packed reaction tube)

Each of the $H_2RuO_4/TiO_2$ catalysts 1 and 2 and the $RuO_2/TiO_2$ catalysts 3 and 4 produced in Examples 1-1 to 1-4 was processed into a cylindrical shape having a diameter of about 20 mm and a height of about 20 mm in such a manner that, in a state where a flow path (through hole) connecting honeycomb-shaped gas inlet and outlet portions was held in a vertical direction, the honeycomb-shaped end in the horizontal direction was scraped. Each of the resulting catalysts was packed in a quartz glass reaction tube (inner diameter: 21 mm) equipped with a sheath tube for internal temperature measurement such that the flow path connecting the honeycomb-shaped inlet and outlet portions was in the same direction as that of the gas flow in the reaction tube. Thereafter, quartz wool was packed between the inner wall of the reaction tube and the periphery of the catalyst to seal between the inner wall of the reaction tube and the periphery of the catalyst such that the gas hardly flowed. In this way, each catalyst packed reaction tube having a catalyst packed bed (inner diameter: 21 mm, length: about 20 mm) packed with the catalyst was produced. The amount (g) and the packing volume ratio (%) of the catalyst packed in the catalyst packed bed are shown in Table 1.

Here, the packing volume of the catalyst packed bed was the same as the packing volume ratio of the catalyst, and a value of 100%- opening ratio (%) was used.

[Method of decomposing nitrous oxide]

The sheath tube was disposed such that the tip of the sheath tube was in contact with the upper portion of the packed catalyst, and the gas temperature at the inlet of the catalyst bed could be measured. The catalyst packed reaction tube was placed in an electric furnace, and the temperature in the quartz glass tube was raised to 280°C under normal pressure (0.1 MPa (absolute)) and nitrogen flow at 1500 $cm^3$ (0°C, 0.1013 MPa (absolute))/min. Subsequently, at the same pressure and the same temperature, a gas to be brought into contact with the catalyst was switched from nitrogen to a gas containing 0.1 vol% of nitrous oxide and 2.7 vol% of oxygen (flow rate: 1500 $cm^3$ (0°C, 0.1013 MPa (absolute))/min) to perform a reaction of decomposing nitrous oxide. The remainder of the nitrous oxide-containing gas is nitrogen. A reaction outlet gas (post-reaction gas) obtained from the reaction tube after 1 hour from the start of the nitrous oxide-decomposing reaction was analyzed.

(Calculation of rate of decreasing nitrous oxide concentration)

The content $C_B$ of nitrous oxide in the nitrous oxide-containing gas and the content $C_A$ of nitrous oxide in the reaction outlet gas were analyzed using gas chromatography (Micro GC (detector: Micro TCD; column: CP-PoraPLOT Q 10 m) manufactured by VARIAN). The analyzed nitrous oxide concentrations were used to calculate the rate of decreasing the nitrous oxide concentration from the following equation. The results are shown in Table 2.

$$\text{Rate (\%) of decreasing nitrous oxide concentration} = [(C_A - C_A)/C_B] \times 100.$$

(Calculation of rate of decomposing nitrous oxide)

Based on the rate of decreasing the nitrous oxide concentration, the rate of decomposing nitrous oxide was calculated by the following equation, assuming that the decomposition reaction of nitrous oxide was a primary reaction. The results are shown in Table 2.

$$\text{Rate (/second) of decomposing nitrous oxide} =$$

$$-\ln\left[1-(\text{rate of reducing nitrous oxide concentration})/100\right] \div$$

$$(\text{contact time between catalyst and nitrous oxide-containing gas})$$

Here, In represents conversion to a natural logarithm. The gas flow rate per second was divided by the volume of the catalyst packed bed [cross-sectional area of quartz glass reaction tube (inner diameter: 21 mm) × height of catalyst], the reciprocal of the resulting value was calculated, and the contact time between the catalyst and the nitrous oxide-containing gas was calculated based on the reciprocal. The contact time between the catalyst and the nitrous oxide-containing gas is shown in the column "contact time" of Table 1.

<Comparative Example 2-1>

The decomposition reaction and analysis of nitrous oxide were performed in the same manner as in Examples 2-1 to 2-4 except that 5.0 g of the $RuO_2/TiO_2$ catalyst C1 produced in Comparative Example 1-1 was directly packed in the catalyst packed area without changing the form. The reaction conditions and results are shown in Tables 1 and 2. The packing volume ratio (%) of the catalyst was calculated by the following equation.

$$\text{Packing volume ratio (\%) of catalyst} =$$

$$\{\text{volume of catalyst } (cm^3/g)\}/\{\text{volume of packed bed } (cm^3/g)\} \times 100$$

Here, the volume of the catalyst was determined by taking the reciprocal of the light bulk density of $1.26\ g/cm^3$ of the $RuO_2/TiO_2$ catalyst C1 upon using a 50-mL measuring cylinder having an inner diameter of 20 mm. The volume of the packed bed was determined by taking 42 molded bodies of the $RuO_2/TiO_2$ catalyst C1 and dividing volumes calculated from their shapes (3 mmφ × average length 3.8 mm) by 2.49 g of 42 pieces of weight.

<Comparative Example 2-2>

A quartz glass reaction tube (inner diameter: 8 mm) equipped with a sheath tube for internal temperature measurement was packed with 0.1 g of the $RuO_2/TiO_2$ catalyst C2. The packing volume ratio (%) of the $RuO_2/TiO_2$ catalyst C2 was calculated by the following equation:

$$\text{Packing volume ratio (\%) of catalyst} =$$

$$\{\text{volume of catalyst } (cm^3/g)\}/\{\text{volume of packed bed } (cm^3/g)\} \times 100$$

Here, the volume of the catalyst was determined by taking the reciprocal of the light bulk density of $0.86\ g/cm^3$ of the $RuO_2/TiO_2$ catalyst C2 upon using a 5-mL measuring cylinder having an inner diameter of 10 mm. The volume of the packed bed was determined by taking 181 particles of the $RuO_2/TiO_2$ catalyst C2 and dividing volumes assuming that the particles had a spherical with a diameter of 0.75 mm by 0.10 g of the weight of 181 particles.

The sheath tube was disposed such that the tip of the sheath tube was in contact with the upper portion of the packed catalyst, and the gas temperature at the inlet of the catalyst bed could be measured. The catalyst packed reaction tube was placed in an electric furnace, and the temperature in the quartz glass tube was raised to 280°C under normal pressure (0.1 MPa (absolute)) and helium flow at $100\ cm^3$ (0°C, 0.1013 MPa (absolute))/min. Subsequently, at the same pressure and the same temperature, a gas to be brought into contact with the catalyst was switched from nitrogen to a gas containing 0.1 vol% of nitrous oxide and 2.7 vol% of oxygen (flow rate: $100\ cm^3$ (0°C, 0.1013 MPa (absolute))/min) to perform a reaction of decomposing nitrous oxide. The remainder of the nitrous oxide-containing gas is helium. A reaction outlet gas (post-reaction gas) obtained from the reaction tube after 30 minutes from the start of the nitrous oxide-decomposing reaction was analyzed.

The rate (%) of decreasing the nitrous oxide concentration and the rate (/second) of decomposing nitrous oxide were calculated in the same procedure as in Example 1-1. The reaction conditions and results are shown in Tables 1 and 2.

<Measurement of Ru content in catalyst>

The total amount of the catalysts after the reaction in Examples 2-1 to 2-4 and Comparative Example 2-1 was recovered, and the catalysts were pulverized in magnetic mortars to obtain powders. Each of the powdery samples was placed in micro powder holders having a sample packing portion of 10 mmφ, covered with a Mylar film having a thickness of 0.6 μm, and subjected to SQX calculation with a wavelength dispersive X-ray fluorescence spectrometer (ZSXprimusII, manufactured by Rigaku Corporation) to obtain semi-quantitative values of the Ru concentration. The results are shown in Table 1. Here, the Ru content of the $RuO_2/TiO_2$ catalyst C2 was set to the same value as that of the $RuO_2/TiO_2$ catalyst C1.

[Table 1]

Table 1

| | Catalyst | | Catalyst packing amount (g) | Packing volume ratio (%) | Ru content (mass%) | Contact time (seconds) |
|---|---|---|---|---|---|---|
| Ex. 2-1 | $H_2RuO_4/TiO_2$ | Catalyst 1 | 5.1 | 50 | 2.8 | 0.27 |
| Ex. 2-2 | $H_2RuO_4/TiO_2$ | Catalyst 2 | 3.2 | 38 | 2.5 | 0.26 |
| Ex. 2-3 | $RuO_2/TiO_2$ | Catalyst 3 | 4.9 | 50 | 5.6 | 0.27 |
| Ex. 2-4 | $RuO_2/TiO_2$ | Catalyst 4 | 5.4 | 50 | 2.0 | 0.30 |
| CEx. 2-1 | $RuO_2/TiO_2$ | Catalyst C1 | 5.0 | 58 | 3.7 | 0.15 |
| CEx. 2-2 | $RuO_2/TiO_2$ | Catalyst C2 | 0.1 | 59 | 3.7 | 0.06 |
| Remarks: 'Ex.' means Example according to this invention, and 'CEx.' means Comparative Example. | | | | | | |

[Table 2]

Table 2

| | Nitrous oxide-containing gas | |
|---|---|---|
| | Rate (%) of decreasing nitrous oxide concentration | Rate (/second) of decomposing nitrous oxide |
| Ex. 2-1 | 87 | 7.5 |
| Ex. 2-2 | 58 | 3.4 |
| Ex. 2-3 | 83 | 6.7 |
| Ex. 2-4 | 78 | 5.0 |
| CEx. 2-1 | 26 | 2.1 |
| CEx. 2-2 | 6 | 1.2 |
| Remarks: 'Ex.' means Example according to this invention, and 'CEx.' means Comparative Example. | | |

As is clear from the results shown in Tables 1 and 2, in the catalysts of Comparative Examples 1-1 and 1-2 in which the packing volume ratio exceeds 50 vol% when the catalyst packed bed is formed and which do not have a honeycomb structure, and the catalyst packed reaction tubes using the catalysts of these Comparative Examples, it is found that in the method of decomposing nitrous oxide, the amount of decrease in the concentration of nitrous oxide is small, the decomposition rate is also slow, and nitrous oxide cannot be efficiently decomposed.

On the other hand, in the catalysts of Examples 1-1 to 1-4 having a honeycomb structure in which the packing volume ratio is from 35 to 50 vol% when the catalyst packed bed is formed, and the catalyst packed reaction tubes using the catalysts of these Examples, it is found that in the method of decomposing nitrous oxide, the amount of decrease in the concentration of nitrous oxide is large, the decomposition rate is also high, and nitrous oxide can be efficiently decomposed. In particular, nitrogen oxide tends to be efficiently decomposed as the packing volume ratio is higher within the range defined in the present invention. However, when the packing volume ratio exceeds the range defined in the present invention, the efficiency of decomposing nitrous oxide remarkably decreases. In order to increase the efficiency of decomposing nitrous oxide, it is found that it is important not only to simply increase the packing volume ratio but also to comprehensively set the shape of the catalyst and the packing volume ratio.

**Claims**

1. A catalyst, comprising a titanium oxide-containing carrier carrying a component containing at least one kind selected from the group consisting of ruthenium and ruthenium compounds,

   wherein the catalyst forms a catalyst packed bed in a reaction tube, and
   wherein the catalyst has a honeycomb structure such that a packing volume ratio is from 35 to 50 vol% when the catalyst packed bed is formed.

2. The catalyst according to claim 1, comprising the carrier carrying the component containing at least one kind selected from the group consisting of ruthenium and ruthenium compounds in an amount of 2 mass% or larger in terms of metal ruthenium.

3. A catalyst, comprising a titanium oxide-containing carrier carrying a component containing ruthenium acid.

4. A catalyst precursor, comprising a titanium oxide-containing carrier carrying a component containing alkali metal ruthenate.

5. A method of producing a catalyst comprising a titanium oxide-containing carrier carrying a component containing at least one kind selected from the group consisting of ruthenium and ruthenium compounds,
   the method comprising the following steps (1) and (2):

   Step (1): a step of bringing the titanium oxide-containing carrier into contact with a solution containing alkali metal ruthenate and water; and
   Step (2): a step of bringing the carrier containing titanium oxide and alkali metal ruthenate prepared in Step (1) into contact with an acid aqueous solution.

6. A catalyst packed reaction tube, comprising a catalyst packed bed packed with a catalyst, the catalyst comprising a titanium oxide-containing carrier carrying a component containing at least one kind selected from the group consisting of ruthenium and ruthenium compounds,
   wherein a packing volume ratio of the catalyst in the catalyst packed bed is from 35 to 50 vol%.

7. A method of decomposing nitrous oxide, which comprises the step of bringing the catalyst according to any one of claims 1 to 3 into contact with a nitrous oxide-containing gas containing nitrous oxide.

8. The method of decomposing nitrous oxide according to claim 7, wherein the nitrous oxide-containing gas comprises at least one gas selected from the group consisting of nitrogen, carbon monoxide, carbon dioxide, water vapor, oxygen, hydrogen, ammonia, nitrogen monoxide, nitrogen dioxide, and hydrocarbons.

9. The method of decomposing nitrous oxide according to claim 7, wherein the nitrous oxide-containing gas is a gas discharged from a chemical production plant.

10. A method of decomposing nitrous oxide, which comprises the step of allowing a nitrous oxide-containing gas containing nitrous oxide to flow through the catalyst packed reaction tube according to claim 6.

11. The method of decomposing nitrous oxide according to claim 10, wherein the nitrous oxide-containing gas comprises at least one gas selected from the group consisting of nitrogen, carbon monoxide, carbon dioxide, water vapor, oxygen, hydrogen, ammonia, nitrogen monoxide, nitrogen dioxide, and hydrocarbons.

12. The method of decomposing nitrous oxide according to claim 10, wherein the nitrous oxide-containing gas is a gas discharged from a chemical production plant.

# EP 4 523 789 A1

## INTERNATIONAL SEARCH REPORT

| International application No. |
| --- |
| **PCT/JP2023/017382** |

### A. CLASSIFICATION OF SUBJECT MATTER

***B01J 23/46***(2006.01)i; ***B01D 53/86***(2006.01)i; ***B01J 35/04***(2006.01)i; ***B01J 37/02***(2006.01)i
FI: B01J23/46 301A; B01J37/02 101E; B01J35/04 301K; B01D53/86 222; B01J37/02 ZAB

According to International Patent Classification (IPC) or to both national classification and IPC

### B. FIELDS SEARCHED

Minimum documentation searched (classification system followed by classification symbols)

B01J21/00-38/74; B01D53/86-53/90,53/94-53/96

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

JSTPlus/JST7580 /JSTChina (JDreamIII); CAplus/REGISTRY (STN)

### C. DOCUMENTS CONSIDERED TO BE RELEVANT

| Category* | Citation of document, with indication, where appropriate, of the relevant passages | Relevant to claim No. |
| --- | --- | --- |
| X | JP 8-141398 A (CATALYSTS & CHEM IND CO LTD) 04 June 1996 (1996-06-04) | 1, 2, 6-12 |
| | claim 1, paragraphs [0001], [0013]-[0014], [0016], example 5 | |
| Y | | 7-12 |
| A | | 3-5 |
| X | JP 7-289897 A (NIPPON SHOKUBAI CO LTD) 07 November 1995 (1995-11-07) | 1, 2, 6-12 |
| | claim 1, paragraphs [0001], [0020]-[0023], [0042], [0057], [0064], [0068]-[0069], [0074]-[0075] | |
| Y | | 7-12 |
| A | | 3-5 |
| X | JP 63-158189 A (NIPPON SHOKUBAI KAGAKU KOGYO CO LTD) 01 July 1988 (1988-07-01) | 1, 2, 6 |
| | claims, examples 1, 2, 4, 10 | |
| A | | 3-5, 7-12 |

☑ Further documents are listed in the continuation of Box C.   ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **05 July 2023** | **18 July 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

17

## INTERNATIONAL SEARCH REPORT

| International application No. |
| --- |
| **PCT/JP2023/017382** |

**C.    DOCUMENTS CONSIDERED TO BE RELEVANT**

| Category* | Citation of document, with indication, where appropriate, of the relevant passages | Relevant to claim No. |
| --- | --- | --- |
| X | SEE, Erich Michael et al. Photodeposition of RuOx Nanostructures on TiO2 Films with a Controllable Morphology. ACS Omega. 2020, vol. 5, pp. 10671-10679, DOI:10.1021/acsomega.9b04077<br>abstract, p. 10671, right column, line 9 to p. 10672, right column, line 2, p. 10677, right column, 5.1.-5.4. | 4 |
| A | | 1-3, 5-12 |
| X | JP 2004-223415 A (NIPPON OIL CORP) 12 August 2004 (2004-08-12)<br>claims, paragraphs [0012]-[0017], examples 1-5 | 4 |
| A | | 1-3, 5-12 |
| X | JP 2019-99393 A (SUMITOMO CHEMICAL COMPANY, LIMITED) 24 June 2019 (2019-06-24)<br>claim 1, paragraphs [0002], [0008], [0018], example 1 | 4 |
| A | | 1-3, 5-12 |
| Y | JP 6-154611 A (SAKAI CHEMICAL INDUSTRY CO) 03 June 1994 (1994-06-03)<br>claim 1, column 1, line 11 to column 3, line 49, example 12 | 7-12 |
| Y | JP 6-218232 A (SAKAI CHEMICAL INDUSTRY CO) 09 August 1994 (1994-08-09)<br>claim 1, paragraphs [0001]-[0004], [0010], example 31 | 7-12 |

Form PCT/ISA/210 (second sheet) (January 2015)

**INTERNATIONAL SEARCH REPORT**

| International application No. |
| --- |
| **PCT/JP2023/017382** |

**Box No. III    Observations where unity of invention is lacking (Continuation of item 3 of first sheet)**

This International Searching Authority found multiple inventions in this international application, as follows:

Claims are classified into the following four inventions.
(Invention 1) Claims 1, 2, and 6-12
    Claims 1, 2 lack novelty in light of JP 8-141398 A, JP 7-289897 A, or JP 63-158189 A and thus do not have a special technical feature. Claims 1, 2, and claim 6 which is substantially identical or equivalent to claim 1, claims 7-12 dependent on claim 1 or claim 6 are classified as invention 1.
(Invention 2) Claim 3
    Claim 3 is not dependent on claim 1 and not substantially identical to or similarly closely related to any of the claims classified as invention 1, and thus the invention in claim 3 cannot be classified as invention 1. In addition, claim 3 has the special technical feature in which a "catalyst formed by supporting a component containing ruthenic acid on a support containing titanium oxide," and is thus classified as invention 2.
(Invention 3) Claim 4
    Claim 4 lacks novelty in light of ACS Omega. 2020, vol. 5, pp. 10671-10679, DOI:10.1021/acsomega.9b04077 or JP 2004-223415 A, and thus do not have a special technical feature. Also, claim 4 is not dependent on claims 1 and 3 and not substantially identical to or similarly closely related to any of the claims classified as inventions 1 and 2, and thus cannot be classified as inventions 1 and 2. Therefore, claim 4 is classified as invention 3.
(Invention 4) Claim 5
    Claim 5 is not dependent on, claims 1, 3, and 4, and is not substantially identical to or similarly closely related to any of the claims classified as inventions 1-3, and thus cannot be classified as inventions 1-3. In addition, claim 5 has the special technical feature of a method for preparing a catalyst including "process (1): process of contacting a carrier containing titanium oxide with a solution containing a ruthenic acid alkali metal salt and water; and process (2): process of contacting a carrier containing titanium oxide and a ruthenic acid alkali metal salt obtained in process (1) with an acidic aqueous solution," and is thus classified as invention 4.

1. ☐ As all required additional search fees were timely paid by the applicant, this international search report covers all searchable claims.

2. ☑ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**    ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (January 2015)

INTERNATIONAL SEARCH REPORT
**Information on patent family members**

International application No.

**PCT/JP2023/017382**

| Patent document cited in search report | | | Publication date (day/month/year) | Patent family member(s) | Publication date (day/month/year) |
|---|---|---|---|---|---|
| JP | 8-141398 | A | 04 June 1996 | (Family: none) | |
| JP | 7-289897 | A | 07 November 1995 | (Family: none) | |
| JP | 63-158189 | A | 01 July 1988 | US 4751005 A claims 1-17, examples 1, 2, 4, 10 EP 257983 A2 | |
| JP | 2004-223415 | A | 12 August 2004 | (Family: none) | |
| JP | 2019-99393 | A | 24 June 2019 | WO 2019/107098 A1 CN 111051238 A | |
| JP | 6-154611 | A | 03 June 1994 | (Family: none) | |
| JP | 6-218232 | A | 09 August 1994 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H06218232 A

**Non-patent literature cited in the description**

- Catalyst Preparation Chemistry. Kodansha Ltd., 1989, 211
- Catalyst Preparation Chemistry. Kodansha Ltd., 1989, 89
- Catalyst Engineering Course. Handbook of Catalysts Using Any of 10 Elements. Chijinshokan, Co. Ltd., 1978, 254
- Metal Oxides and Composite Oxides. Kodansha Ltd., 1980, 107